# DEMANDE DE BREVET EUROPEEN

(11) **EP 4 307 531 A1**
(43) Date de publication de la demande: **17.01.2024**
(21) Numéro de dépôt: 23182243.8
(22) Date de dépôt: 29.06.2023
(51) Int. Cl.: H02K 3/24, H02K 3/50, H02K 5/04

(54) **MACHINE ÉLECTRIQUE AVEC CANAL DE REFROIDISSEMENT DANS LE MATÉRIAU D'ENROBAGE DES TÊTES DE BOBINES**

(30) Priorité: 12.07.2022 FR 2207148
(71) Demandeur: IFP Energies nouvelles, 92500 Rueil-Malmaison (FR)
(72) Inventeur: VALIN, Thomas, 92852 RUEIL-MALMAISON CEDEX (FR); VENTURI, Stephane, 92852 RUEIL-MALMAISON CEDEX (FR); MILOSAVLJEVIC, Misa, 92852 RUEIL-MALMAISON CEDEX (FR)
(74) Mandataire: IFP Energies nouvelles

(57) **Abrégé**

La présente invention concerne une machine électrique (1) comprenant un stator (3), un rotor (2), un carter (4), et deux flasques (5). Le stator comprend un corps de stator et des bobines (6), dont les extrémités forment des têtes de bobines (7) à l'extérieur du corps de stator. Selon l'invention, les têtes de bobines (7) sont enrobées dans un matériau d'enrobage (8) hydrophobe. De plus, à chaque extrémité de la machine électrique, un canal de refroidissement (9) est délimité au moins partiellement par le matériau d'enrobage (8).

## Description

### Domaine technique

La présente invention concerne le domaine des machines électriques tournantes, et en particulier le refroidissement de ces machines électriques qui peuvent fonctionner en tant que moteur électrique ou en tant que générateur électrique. Les machines électriques de l'invention peuvent notamment être utilisées comme moteur électrique dans des applications de transport (automobile par exemple) ou d'engins ou d'outils agricoles.

L'invention peut notamment être utilisée pour une machine électrique tournante synchrone, notamment une machine électrique synchro-réluctante, assistée ou non d'aimants permanents, mais peut également être appliquée à d'autres types de machines électriques, comme des machines synchrones ou asynchrones.

Une machine électrique comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entraîner en rotation le rotor (fonctionnement en tant que moteur électrique). Le stator comprend généralement un corps de stator et des bobines qui entourent au moins partiellement le corps de stator.

Lors de leur fonctionnement, les machines électriques s'échauffent du fait des pertes électromagnétiques (pertes par effet Joule, pertes fer et éventuellement pertes dans les aimants) et mécaniques. Cet échauffement nuit à leur fonctionnement et conduit à la dégradation de leurs performances (puissance et rendement). Par exemple, si le stator n'est pas refroidi (ou pas suffisamment refroidi), la température du bobinage augmente, ce qui peut entraîner une baisse de la conductivité électrique du conducteur en cuivre ou en aluminium constituant les bobines et une diminution de la durée de vie du bobinage. La résistance électrique du conducteur augmentant, il y a également une augmentation des pertes et une diminution du de rendement. Les divers composants électromagnétiques d'une machine électrique, ainsi que certains matériaux isolants utilisés dans les pièces de la machine électrique, sont ainsi sensibles à l'échauffement produit en fonctionnement, et leur refroidissement est indispensable pour dissiper la chaleur produite, afin de conserver un bon rendement de la machine électrique, d'assurer une répétabilité de ses performances, d'allonger sa durée de vie et de limiter la maintenance.

La recherche d'un refroidissement performant est donc une préoccupation majeure pour les fabricants et les intégrateurs de machines électriques.

### Technique antérieure

Classiquement, le refroidissement d'une machine électrique est réalisé par un circuit de circulation d'un fluide de refroidissement. Une des solutions consiste à faire circuler un fluide de refroidissement dans un canal situé dans la chemise extérieure (appelée également carter de la machine électrique) en contact avec la surface extérieure du corps de stator. Dans ce système de refroidissement, l'échange thermique est réalisé radialement, et est indirect entre les parties actives (rotor et stator) de la machine électrique et le fluide de refroidissement. En effet, le flux thermique dans les bobines transite par conduction du cuivre des bobines au stator, puis par la chemise, avant d'être transmis dans le fluide de refroidissement par convection. Cette solution refroidit bien le stator. Toutefois, la source de refroidissement est éloignée des têtes de bobines qui forment un point chaud, et qui sont situées aux extrémités du stator, et généralement libres dans l'air interne de la machine électrique. Ainsi, le système de refroidissement n'est pas optimisé. De plus, un tel système accroit le diamètre de la machine électrique. Par exemple, pour une machine électrique compacte d'un diamètre stator de 150 mm, la chemise peut représenter de 30 à 40 mm, ce qui correspond à 20 à 25 % du diamètre de la machine électrique. En outre, cette solution nécessite des opérations d'usinage de la chemise, et entraîne une augmentation de la masse de la machine électrique.

Pour améliorer le refroidissement des têtes de bobines, il existe des solutions mettant en oeuvre de la résine conductrice thermique pour augmenter la conductivité entre les têtes de bobines et le carter, et donc favoriser l'évacuation des calories vers la chemise. Une telle résine est généralement appelée « potting » de l'anglais enrobage. Cette solution est efficace, toutefois elle présente un coût supplémentaire (matière résine et procédé de mise en oeuvre), et maintient la fonction de refroidissement dans la chemise avec l'augmentation du diamètre externe de l'enveloppe extérieure de la machine électrique, et avec augmentation de la masse du moteur.

La demande de brevet dont le numéro de dépôt est FR 21/07709 propose une solution à ce problème avec une forme particulière de canaux de refroidissement. Pour cette technologie, les canaux de refroidissement sont agencés dans le carter, le matériau d'enrobage, et dans les flasques. Bien que donnant satisfaction, cette solution nécessite toujours le passage de canaux dans la chemise, ce qui accroit le diamètre de la machine électrique. De plus, cette solution nécessite une mise en forme spécifique de plusieurs composants : le carter, le matériau d'enrobage et les flasques, ce qui complexifie la fabrication de la machine électrique, et la gestion de l'étanchéité entre ces composants. En outre, les têtes de bobines sont refroidies radialement et non longitudinalement.

La demande de brevet US2005035673 décrit une machine électrique avec un système de refroidissement des parties actives de la machine électrique. Selon un des modes de réalisation décrits, le système de refroidissement peut comporter un tube inséré dans un matériau d'enrobage des têtes de bobines, le tube étant de préférence en cuivre. L'utilisation d'un tube au sein du matériau d'enrobage complexifie la fabrication et l'assemblage du système de refroidissement. De plus, la masse de la machine électrique est augmentée. En outre, la dilatation du matériau d'enrobage due à la chaleur est contrainte par la présence du tube, ce qui augmente la fatigue du matériau d'enrobage.

### Résumé de l'invention

L'invention a pour but de permettre un refroidissement efficace des parties actives d'une machine électrique, en particulier des têtes de bobines, tout en permettant une compacité de la machine électrique, et un assemblage simple. Pour cela, la présente invention concerne une machine électrique comprenant un stator, un rotor, un carter, et deux flasques. Le stator comprend un corps de stator et des bobines, dont les extrémités forment des têtes de bobines à l'extérieur du corps de stator. Selon l'invention, les têtes de bobines sont enrobées dans un matériau d'enrobage hydrophobe. De plus, à chaque extrémité de la machine électrique, un canal de refroidissement est délimité au moins partiellement par le matériau d'enrobage. L'invention concerne une machine électrique comprenant un rotor et un stator coaxiaux autour d'un axe longitudinal, un carter et deux flasques, lesdits deux flasques étant agencés respectivement aux extrémités longitudinales dudit carter et formant avec ledit carter une enveloppe extérieure de ladite machine électrique, ledit stator entourant ledit rotor, ledit stator comprenant un corps de stator et des bobines avec des têtes de bobines, lesdites têtes de bobines étant enrobées d'un matériau d'enrobage, tel qu'une résine. Ledit matériau d'enrobage est hydrophobe, et en ce que, à chaque extrémité de ladite machine électrique, un canal de refroidissement pour une circulation d'un fluide de refroidissement est délimité au moins partiellement par ledit matériau d'enrobage.

Selon un mode de réalisation, ledit canal de refroidissement est agencé longitudinalement entre lesdites têtes de bobines et ledit flasque.

Conformément à une mise en oeuvre, ledit canal de refroidissement a une forme sensiblement torique avec une section circulaire.

Selon un aspect, à chaque extrémité longitudinale de ladite machine électrique, ledit matériau d'enrobage remplit l'espace annulaire entre ledit corps de stator et chaque flasque.

Avantageusement, ledit canal de refroidissement est délimité entièrement par ledit matériau d'enrobage.

De manière avantageuse, ledit matériau d'enrobage est en deux parties, ledit canal de refroidissement étant formé par l'assemblage desdites deux parties dudit matériau d'enrobage.

Selon une caractéristique, ledit canal de refroidissement est délimité par ledit matériau d'enrobage et par une pièce rapportée fixée à une extrémité longitudinale dudit matériau d'enrobage, ledit matériau d'enrobage remplissant l'espace annulaire entre ledit corps de stator et ladite pièce rapportée fixée audit matériau d'enrobage.

Selon une option, ladite pièce rapportée fixée audit matériau d'enrobage a une forme annulaire, et est coaxial audit axe longitudinal de ladite machine électrique.

Conformément à un mode de réalisation, ledit canal de refroidissement est obtenu par moulage ou par usinage dudit matériau d'enrobage.

Selon une mise en oeuvre, ledit carter ne comporte aucun circuit de refroidissement.

Avantageusement, ladite machine électrique est une machine électrique synchrone, notamment une machine synchro-réluctante, de préférence une machine synchro-réluctante assistée d'aimants permanents.

D'autres caractéristiques et avantages du système selon l'invention, apparaîtront à la lecture de la description ci-après d'exemples non limitatifs de réalisations, en se référant aux figures annexées et décrites ci-après.

### Liste des figures

La figure 1 illustre une construction classique d'une machine électrique.
La figure 2 illustre une machine électrique selon une première variante d'un premier mode de réalisation de l'invention.
La figure 3 illustre une machine électrique selon une deuxième variante du premier mode de réalisation de l'invention.
La figure 4 illustre une machine électrique selon un deuxième mode de réalisation de l'invention.
La figure 5 illustre une machine électrique selon un troisième mode de réalisation de l'invention.
La figure 6 illustre une machine électrique selon une variante du troisième mode de réalisation de l'invention.

### Description des modes de réalisation

L'invention concerne une machine électrique, notamment une machine électrique tournante. Selon l'invention, la machine électrique comprend :
- Un stator,
- Un rotor, coaxial avec le stator autour d'un axe longitudinal,
- Un carter, entourant radialement le stator,
- Deux flasques, les flasques étant agencés aux extrémités longitudinales du carter, les flasques étant fixés au carter, et formant avec le carter une enveloppe extérieure de la machine électrique, cette enveloppe extérieure servant de protection et de maintien du rotor par rapport au stator.

Classiquement, le rotor est mobile en rotation et le stator est fixe par rapport au carter. Le stator entoure le rotor. En d'autres termes, il s'agit d'une machine électrique à rotor interne. Le stator comprend un corps de stator et des bobines insérées dans le corps du stator. Aux deux extrémités longitudinales du corps du stator, les bobines dépassent et sont repliées. Cette partie forme ce qu'on appelle les têtes de bobines. Ainsi, la machine électrique comprend des têtes de bobines à chaque extrémité longitudinale.

Lorsque la machine électrique fonctionne en tant que moteur, le stator génère la rotation du rotor par génération d'un champ magnétique créé par le stator. Lorsque la machine électrique fonctionne en tant que générateur électrique, la rotation du rotor peut générer une énergie électrique dans les bobines du stator au moyen d'un champ magnétique créé par le rotor.

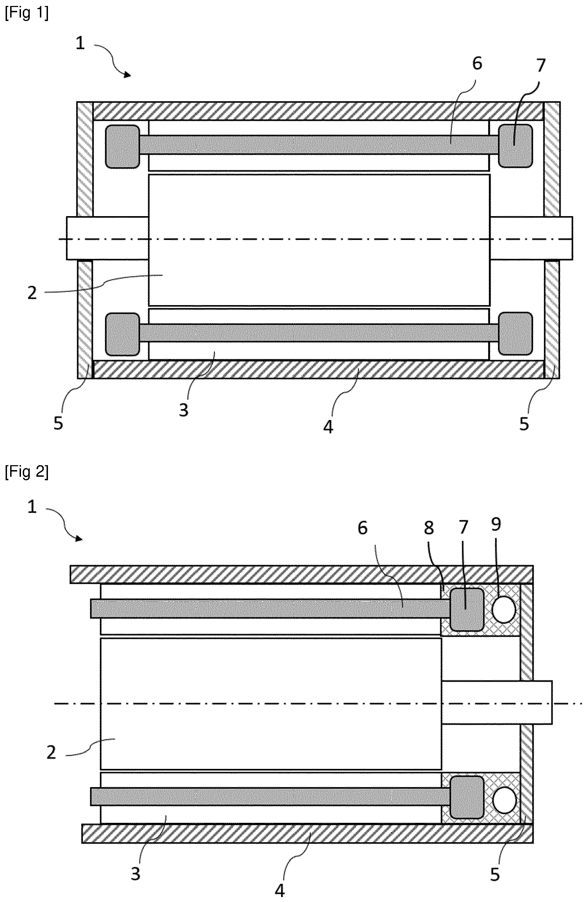

La figure 1 illustre, schématiquement et de manière non limitative, les composants d'une machine électrique. Cette figure est un plan en coupe de la machine électrique selon un plan longitudinal. Sur cette figure, les roulements et les moyens d'étanchéité ne sont pas représentés. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse les deux flasques 5. En variante, l'arbre du rotor 2 peut traverser un seul flasque 5.

Selon l'invention, les têtes de bobines sont enrobées d'un matériau d'enrobage (appelé en anglais « potting »). Ainsi, une partie de l'espace entre chaque flasque et le corps de stator est rempli du matériau d'enrobage pour enrober les têtes de bobines, à chaque extrémité longitudinale. Toutes les têtes de bobines sont enrobées.

Avantageusement, l'enrobage des têtes de bobines peut avoir sensiblement une forme cylindrique, dont le diamètre extérieur est en contact avec le carter de la machine électrique. De préférence, la forme cylindrique de l'enrobage peut avoir un diamètre interne qui est supérieur ou sensiblement égal au diamètre interne du corps de stator, pour ne pas venir en contact avec la partie tournante formée par le rotor.

De préférence, le matériau d'enrobage peut être un isolant électrique et peut avantageusement être conducteur thermique. Ainsi, il participe à l'évacuation de la chaleur au sein des têtes de bobines. De ce fait, la conduction thermique entre les têtes de bobines et l'enveloppe extérieure est améliorée, ce qui favorise le refroidissement de la machine par rapport à une solution où les têtes de bobines sont entourées seulement d'air qui joue le rôle d'isolant thermique, ce qui nuit au refroidissement de la machine électrique.

De manière avantageuse, le matériau d'enrobage peut être une résine ou tout matériau analogue. Pour ce mode de réalisation, la résine peut être coulée sur place une fois l'assemblage monté. Ainsi, le contact entre le matériau d'enrobage et le corps de stator est optimal. De plus, la résine peut combler tout l'espace autour des têtes de bobines.

De manière avantageuse, le matériau d'enrobage peut être une résine époxy, alumine/céramique, une résine boostée en alumine qui ont de bonnes propriétés d'isolation électrique (rigidité diélectrique supérieur à 1 kV/mm) tout en assurant des propriétés de conductivité thermique suffisantes (conductivité thermique supérieure à 0,3 W/m.K).

Selon l'invention, le matériau d'enrobage est hydrophobe. Le matériau d'enrobage peut être rendu hydrophobe par un revêtement, par exemple pour une résine un revêtement « epoxy nanocomposite coating » (pouvant être traduit par revêtement nano-composite expoxy) ou « Graphene oxide » (de l'anglais oxyde de graphène). Ainsi, le matériau d'enrobage est adapté pour être en contact avec un fluide, tel qu'un fluide de refroidissement, sans modifier les caractéristiques mécaniques et physiques du matériau d'enrobage.

De plus, la machine électrique comprend un circuit de refroidissement du stator au moyen de la circulation d'un fluide de refroidissement. En effet, un fluide de refroidissement, tel que de l'eau ou de l'eau glycolée, peut circuler dans le circuit de refroidissement, et ainsi refroidir le stator. La température du fluide de refroidissement en entrée peut être inférieure à 80°C, de préférence inférieure à 60°C.

Selon l'invention, le circuit de refroidissement comprend un canal de refroidissement à chaque extrémité longitudinale de la machine électrique, pour la circulation d'un fluide de refroidissement. Chaque canal de refroidissement est délimité au moins partiellement par le matériau d'enrobage. En d'autres termes, le canal de refroidissement est formé au moins partiellement directement dans le matériau d'enrobage, sans matériau supplémentaire entre le matériau d'enrobage et le liquide de refroidissement. Par conséquent, le circuit de refroidissement ne comprend aucun tube inséré dans le matériau d'enrobage. La délimitation par le matériau d'enrobage est dite partielle, car au moins une portion de la section du canal de refroidissement est contenue dans le matériau d'enrobage. Par exemple, un tiers, la moitié ou la totalité de la section du canal de refroidissement peut être contenue dans le matériau d'enrobage. Cette construction permet un refroidissement longitudinal des têtes de bobines. L'absence de tube au sein du matériau d'enrobage supprime une résistance thermique et une contrainte sur le matériau d'enrobage, qui en cyclage de dilatation peut se décoller du tube et créer une résistance quasi équivalente à l'air supprimant les bénéfices attendus en termes de transfert thermique. Ce refroidissement des têtes de bobines pouvant être suffisant, il n'est pas nécessaire d'associer un canal de refroidissement au sein du carter. Ainsi, selon un mode de réalisation de l'invention, le carter peut ne comporter aucun circuit de refroidissement radial du stator. De cette manière, l'épaisseur du carter peut être réduite par rapport à une machine électrique conventionnelle qui comprendrait un circuit de refroidissement dans le carter. Par conséquent, à diamètre extérieur identique, on peut construire une machine électrique avec des parties actives (rotor et stator) plus importantes. Cela peut permettre d'améliorer les performances de la machine électrique (par exemple le couple) à diamètre extérieur identique. Ainsi, la machine électrique selon l'invention est particulièrement adaptée à une utilisation dans un véhicule, pour lequel le volume disponible est restreint.

Conformément à un mode de réalisation de l'invention, chaque canal de refroidissement peut être agencé longitudinalement entre les têtes de bobines et un flasque. Ainsi, le canal de refroidissement permet le refroidissement longitudinal des têtes de bobines, qui peut agir comme un puit de calories pour le bobinage entier.

Selon une option de réalisation, le canal de refroidissement peut avoir une forme sensiblement torique (à laquelle on ajoute une entrée et une sortie du fluide de refroidissement), dont l'axe est coaxial avec l'axe longitudinal de la machine électrique. De plus, le diamètre du tore peut sensiblement correspondre au diamètre des têtes de bobines, pour assurer un refroidissement optimal du bobinage, et notamment des têtes de bobines. De préférence, la section du tore peut être sensiblement circulaire.

De manière avantageuse, le canal de refroidissement peut être formé dans le matériau d'enrobage par une opération d'usinage ou par moulage ou toute méthode analogue, par exemple moulage avec noyau en cire perdue. Ces modes de réalisation permettent une fabrication aisée du canal de refroidissement.

Selon un premier mode de réalisation de l'invention, à chaque extrémité, le matériau d'enrobage peut remplir l'espace annulaire entre le corps de stator et le flasque. Ainsi, une conduction d'une partie des calories est réalisée depuis les têtes de bobines vers le flasque, ce qui permet une augmentation du refroidissement des têtes de bobines. Pour ce premier mode de réalisation de l'invention, le canal de refroidissement est entièrement délimité par le matériau d'enrobage.

Selon une première variante de ce premier mode de réalisation de l'invention, à chaque extrémité, le matériau d'enrobage peut être formé d'une unique partie. Pour cette première variante, le canal de refroidissement peut être moulé dans le matériau d'enrobage, le canal de refroidissement pouvant être formé par un noyau. Par exemple, le noyau peut être en cire perdue ou tout matériau analogue. En effet, ce type de matériau peut être détruit après la coulée du matériau d'enrobage pour former le canal de refroidissement. Cette première variante permet de limiter le nombre de pièces du système de refroidissement, ce qui facilite son assemblage et son montage.

Selon une deuxième variante de ce premier mode de réalisation de l'invention, à chaque extrémité, le matériau d'enrobage peut être formé en deux parties fixées l'une sur l'autre. Pour cette deuxième variante, le canal de refroidissement est formé par l'assemblage des deux parties du matériau d'enrobage. Par exemple, les deux parties peuvent avoir sensiblement une forme annulaire, de mêmes dimensions internes et externes, et être fixées chacune à une extrémité longitudinale. La forme annulaire peut éventuellement comprendre des emplacements pour le passage des câbles de phases des bobines. Chaque extrémité longitudinale d'une partie de matériau d'enrobage peut comprendre une portion de section du canal de refroidissement, par exemple une demi-section du canal de refroidissement. La portion de canal de refroidissement étant sur une surface extérieure d'une partie du matériau d'enrobage, peut être réalisée par usinage ou par moulage. La fixation des deux parties de matériau d'enrobage peut être réalisée notamment par collage, en particulier collage au moyen d'une résine conductrice thermique, notamment une colle époxy. De préférence, la fixation des deux parties du matériau d'enrobage peut être étanche. Cette deuxième variante permet de limiter le nombre de matériaux du système de refroidissement, ce qui facilite son assemblage et son montage.

Selon un deuxième mode de réalisation de l'invention, à chaque extrémité, le canal de refroidissement peut être délimité par le matériau d'enrobage est une pièce rapportée fixée à une extrémité longitudinale sur le matériau d'enrobage. Pour ce deuxième mode de réalisation, le matériau d'enrobage peut remplir l'espace annulaire entre le corps de stator et la pièce rapportée. La fixation de la pièce rapportée sur le matériau d'enrobage peut être réalisée notamment par collage, en particulier collage au moyen d'une résine conductrice thermique, notamment une colle époxy. La pièce rapportée peut avoir une forme sensiblement annulaire, dont les dimensions internes et externes sont sensiblement identiques aux dimensions internes et externes du matériau d'enrobage. La pièce rapportée peut être en contact avec le flasque, et éventuellement le carter. La pièce rapportée peut comprendre une portion de section du canal de refroidissement, par exemple une demi-section du canal de refroidissement. L'extrémité longitudinale du matériau d'enrobage peut alors comprendre une portion complémentaire de section du canal de refroidissement, par exemple une demi-section du canal de refroidissement. La portion de canal de refroidissement étant sur une surface extérieure d'une partie du matériau d'enrobage, peut être réalisée par usinage ou par moulage. De manière avantageuse, la pièce rapportée peut être en métal, ou tout matériau analogue. Ces matériaux favorisent le transfert thermique, et par conséquent le refroidissement des têtes de bobines. Ce mode de réalisation augmente l'efficacité du système de refroidissement. Ainsi, pour ce deuxième mode de réalisation, le canal de refroidissement est délimité partiellement par le matériau d'enrobage. De plus, ce mode de réalisation apporte de la simplicité dans la connexion des entrées et de sorties du canal de refroidissement.

Avantageusement, le corps de stator peut être formé par un empilage de tôles.

Selon un mode de réalisation, le circuit de refroidissement peut comprendre en outre :
- Une entrée du fluide de refroidissement axial ou radial sur chaque flasque,
- Une sortie du fluide de refroidissement axial ou radial sur chaque flasque.

Pour ce mode de réalisation, le circuit de refroidissement peut comprendre un passage par conduit externe rigide ou souple, ou au sein du carter entre la sortie du canal du premier flasque et l'entrée du canal du deuxième flasque

En outre, un deuxième passage entre la sortie du deuxième flasque et le premier flasque peut être prévu, de manière à avoir l'entrée et la sortie du circuit de refroidissement d'un unique côté de la machine électrique.

De préférence, la machine électrique peut être une machine synchrone, notamment une machine synchro-réluctance, de manière préférée une machine synchrone réluctante assistée d'aimants permanents. En effet, de telles machines électriques génèrent de la chaleur importante au sein des têtes de bobines. Toutefois, l'invention peut être appliquée à d'autres types de machine électrique, par exemple les machines asynchrones, les machines réluctantes, etc.

En outre, l'invention, de préférence le mode de réalisation de l'invention sans canal de refroidissement dans le carter, peut être particulièrement adaptée à une machine électrique dite « courte », c'est-à-dire de dimension longitudinale réduite. Une telle machine électrique « courte » est une machine pour laquelle la longueur longitudinale des têtes de bobines est strictement supérieure à la longueur longitudinale du corps de stator. Une telle machine courte peut également être définie lorsque la longueur longitudinale du corps du rotor est inférieure à 0,4 fois le diamètre extérieur du corps du rotor. En effet, pour ce type de machine électrique « courte », le refroidissement par le canal de refroidissement longitudinal est suffisant.

Toutefois, l'invention peut également appliquée pour une machine électrique « longue ». Pour une telle machine électrique, le canal de refroidissement longitudinal peut être suffisant. Néanmoins, dans certains cas, un canal de refroidissement peut également être prévu dans le carter pour un refroidissement radial du stator, s'il existe un besoin d'un refroidissement plus important.

La figure 2 illustre, schématiquement et de manière non limitative, une machine électrique selon une première variante d'un premier mode de réalisation de l'invention. Cette figure est un plan en coupe de la machine électrique selon un plan longitudinal. Sur cette figure, les roulements et les moyens d'étanchéité ne sont pas représentés. La partie gauche de la machine électrique n'est pas détaillée pour la simplification de la figure. Toutefois, cette partie peut se déduire par symétrie par rapport à la partie droite. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse le flasque 5 de droite (il peut traverser ou non le flasque de gauche non représenté). Les têtes de bobines 7 sont enrobées par un matériau d'enrobage 8. Le matériau d'enrobage 8 remplit l'espace annulaire entre le corps de stator 3 et le flasque 5. Un canal de refroidissement 9 pour la circulation d'un fluide de refroidissement est agencé au sein du matériau d'enrobage 8. De cette manière, le fluide de refroidissement est directement en contact avec le matériau d'enrobage 8. Le canal de refroidissement 9 a sensiblement une forme torique, avec une section circulaire.

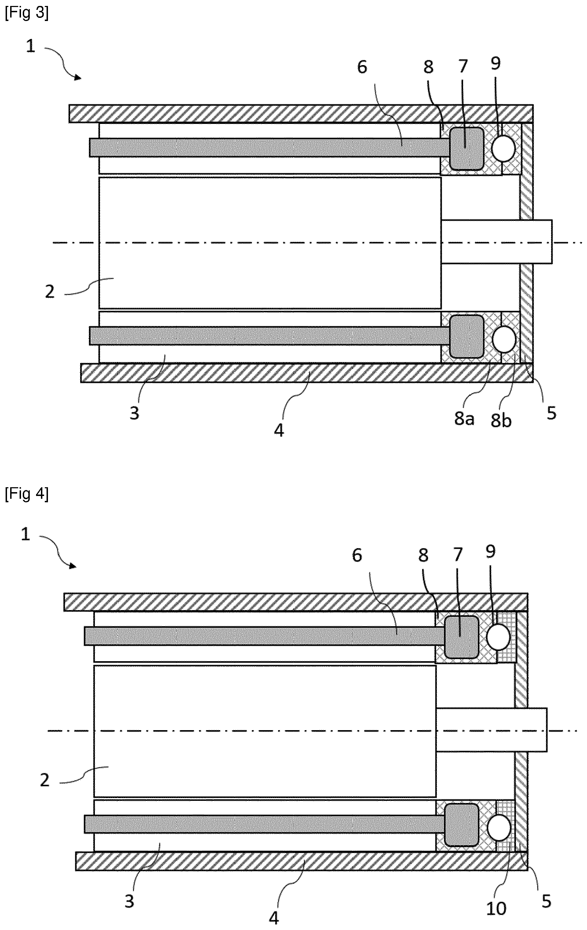

La figure 3 illustre, schématiquement et de manière non limitative, une machine électrique selon une deuxième variante d'un premier mode de réalisation de l'invention. Cette figure est un plan en coupe de la machine électrique selon un plan longitudinal. Sur cette figure, les roulements et les moyens d'étanchéité ne sont pas représentés. La partie gauche de la machine électrique n'est pas détaillée pour la simplification de la figure. Toutefois, cette partie peut se déduire par symétrie par rapport à la partie droite. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse le flasque 5 de droite (il peut traverser ou non le flasque de gauche non représenté). Les têtes de bobines 7 sont enrobées par un matériau d'enrobage 8. Le matériau d'enrobage 8 remplit l'espace annulaire entre le corps de stator 3 et le flasque 5. Le matériau d'enrobage 8 est réalisé en deux parties indiquées 8a et 8b, qui sont fixées l'une à l'autre selon un plan transversal (perpendiculaire à l'axe longitudinal de la machine électrique). Un canal de refroidissement 9 pour la circulation d'un fluide de refroidissement est agencé au sein du matériau d'enrobage 8. Pour cela, chaque partie de matériau d'enrobage 8a et 8b peut comprendre une demi-section du canal de refroidissement 9. De cette manière, le fluide de refroidissement est directement en contact avec le matériau d'enrobage 8. Le canal de refroidissement 9 a sensiblement une forme torique, avec une section circulaire.

La figure 4 illustre, schématiquement et de manière non limitative, une machine électrique selon un deuxième mode de réalisation de l'invention. Cette figure est un plan en coupe de la machine électrique selon un plan longitudinal. Sur cette figure, les roulements et les moyens d'étanchéité ne sont pas représentés. La partie gauche de la machine électrique n'est pas détaillée pour la simplification de la figure. Toutefois, cette partie peut se déduire par symétrie par rapport à la partie droite. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse le flasque 5 de droite (il peut traverser ou non le flasque de gauche non représenté). Les têtes de bobines 7 sont enrobées par un matériau d'enrobage 8. Le matériau d'enrobage 8 remplit l'espace annulaire entre le corps de stator 3 et une pièce rapportée 10. La pièce rapportée 10 est fixée au matériau d'enrobage selon un plan transversal (perpendiculaire à l'axe longitudinal de la machine électrique). De l'autre côté, la pièce rapportée 10 est en appui contre le flasque 5. La pièce rapportée 10 a une forme annulaire. Un canal de refroidissement 9 pour la circulation d'un fluide de refroidissement est agencé entre le matériau d'enrobage 8 et la pièce rapportée 10. Pour cela, le matériau d'enrobage 8 peut comprendre une demi-section du canal de refroidissement 9. De même, la pièce rapportée 10 peut comprendre une demi-section du canal de refroidissement 9. De cette manière, le fluide de refroidissement est directement en contact avec le matériau d'enrobage 8. Le canal de refroidissement 9 a sensiblement une forme torique, avec une section circulaire.

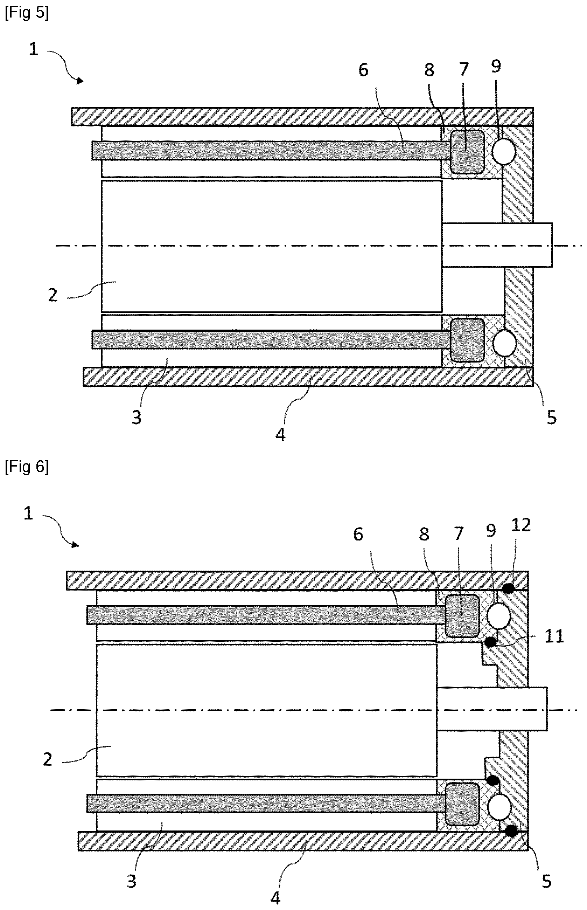

La figure 5 illustre, schématiquement et de manière non limitative, une machine électrique selon un troisième mode de réalisation de l'invention. Cette figure est un plan en coupe de la machine électrique selon un plan longitudinal. Sur cette figure, les roulements et les moyens d'étanchéité ne sont pas représentés. La partie gauche de la machine électrique n'est pas détaillée pour la simplification de la figure. Toutefois, cette partie peut se déduire par symétrie par rapport à la partie droite. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse le flasque 5 de droite (il peut traverser ou non le flasque de gauche non représenté). Les têtes de bobines 7 sont enrobées par un matériau d'enrobage 8.. Le matériau d'enrobage 8 remplit l'espace annulaire entre le corps de stator 3 et le flasque 5. Un canal de refroidissement 9 pour la circulation d'un fluide de refroidissement est agencé entre le matériau d'enrobage 8 et le flasque 5. Pour cela, le matériau d'enrobage 8 comprend une demi-section du canal de refroidissement 9. De même, le flasque 5 comprend une demi-section du canal de refroidissement 9. De cette manière, le fluide de refroidissement est directement en contact avec le matériau d'enrobage 8. Le canal de refroidissement 9 a sensiblement une forme torique, avec une section circulaire.

La figure 6 illustre schématiquement et de manière non limitative, une machine électrique selon une variante du troisième mode de réalisation de l'invention de la figure 5. Cette figure est un plan en coupe de la machine électrique selon un plan longitudinal. Sur cette figure, les roulements et les moyens d'étanchéité ne sont pas représentés. La partie gauche de la machine électrique n'est pas détaillée pour la simplification de la figure. Toutefois, cette partie peut se déduire par symétrie par rapport à la partie droite. En différence avec la réalisation de la figure 5, le flasque 5 comprend un épaulement. De plus, la machine électrique comprend une première étanchéité 11 entre le flasque 5 et le matériau d'enrobage 8, ainsi qu'une deuxième étanchéité 12 entre le flasque 5 et le carter 4.

Comme il va de soi, l'invention ne se limite pas aux seules formes de réalisation de la machine électrique, décrites ci-dessus à titre d'exemple, elle embrasse au contraire toutes les variantes de réalisation

## Revendications

1. Machine électrique comprenant un rotor (2) et un stator (3) coaxiaux autour d'un axe longitudinal, un carter (4) et deux flasques (5), lesdits deux flasques (5) étant agencés respectivement aux extrémités longitudinales dudit carter (4) et formant avec ledit carter (4) une enveloppe extérieure de ladite machine électrique (1), ledit stator (3) entourant ledit rotor (2), ledit stator (3) comprenant un corps de stator et des bobines (6) avec des têtes de bobines (7), lesdites têtes de bobines (7) étant enrobées d'un matériau d'enrobage (8), tel qu'une résine, **caractérisée en ce que** ledit matériau d'enrobage (8) est hydrophobe, et **en ce que**, à chaque extrémité de ladite machine électrique (1), un canal de refroidissement (9) pour une circulation d'un fluide de refroidissement est délimité au moins partiellement par ledit matériau d'enrobage (8).

2. Machine électrique selon la revendication 1, dans laquelle ledit canal de refroidissement (9) est agencé longitudinalement entre lesdites têtes de bobines (7) et ledit flasque (5).

3. Machine électrique selon l'une des revendications précédentes, dans laquelle ledit canal de refroidissement (9) a une forme sensiblement torique avec une section circulaire.

4. Machine électrique selon l'une des revendications précédentes, dans laquelle, à chaque extrémité longitudinale de ladite machine électrique (1), ledit matériau d'enrobage (8) remplit l'espace annulaire entre ledit corps de stator et chaque flasque (5).

5. Machine électrique selon la revendication 4, dans laquelle ledit canal de refroidissement (9) est délimité entièrement par ledit matériau d'enrobage (8).

6. Machine électrique selon la revendication 5, dans laquelle ledit matériau d'enrobage (8) est en deux parties, ledit canal de refroidissement (9) étant formé par l'assemblage desdites deux parties dudit matériau d'enrobage (8).

7. Machine électrique selon l'une des revendications 1 à 3, dans laquelle ledit canal de refroidissement (9) est délimité par ledit matériau d'enrobage (8) et par une pièce rapportée (10) fixée à une extrémité longitudinale dudit matériau d'enrobage (8), ledit matériau d'enrobage (8) remplissant l'espace annulaire entre ledit corps de stator et ladite pièce rapportée (10) fixée audit matériau d'enrobage (8).

8. Machine électrique selon la revendication 7, dans laquelle ladite pièce rapportée fixée audit matériau d'enrobage (8) a une forme annulaire, et est coaxial audit axe longitudinal de ladite machine électrique (1).

9. Machine électrique selon l'une des revendications précédentes, dans laquelle ledit canal de refroidissement (9) est obtenu par moulage ou par usinage dudit matériau d'enrobage (8).

10. Machine électrique selon l'une des revendications précédentes, dans laquelle ledit carter (4) ne comporte aucun circuit de refroidissement.

11. Machine électrique selon l'une des revendications précédentes, dans laquelle ladite machine électrique (1) est une machine électrique synchrone, notamment une machine synchro-réluctante, de préférence une machine synchro-réluctante assistée d'aimants permanents.
